(19) Europäisches Patentamt / European Patent Office / Office européen des brevets

(11) **EP 4 546 248 A1**

(12) **EUROPEAN PATENT APPLICATION**
published in accordance with Art. 153(4) EPC

(43) Date of publication:
**30.04.2025 Bulletin 2025/18**

(21) Application number: **23827025.0**

(22) Date of filing: **09.06.2023**

(51) International Patent Classification (IPC):
*G06Q 50/06* (2024.01)

(52) Cooperative Patent Classification (CPC):
**G06Q 50/06**

(86) International application number:
**PCT/JP2023/021617**

(87) International publication number:
**WO 2023/248839 (28.12.2023 Gazette 2023/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.06.2022 JP 2022101980**

(71) Applicant: **Panasonic Intellectual Property Management Co., Ltd.**
**Kadoma-shi, Osaka 571-0057 (JP)**

(72) Inventor: **TANAKA, Yuji**
**Kadoma-shi, Osaka 571-0057 (JP)**

(74) Representative: **Appelt, Christian W.**
**Boehmert & Boehmert**
**Anwaltspartnerschaft mbB**
**Pettenkoferstrasse 22**
**80336 München (DE)**

(54) **EMISSION AMOUNT CALCULATION METHOD, PROGRAM, AND EMISSION AMOUNT CALCULATION SYSTEM**

(57)    An emissions calculation method includes obtaining charge information, using a second server (12) (i.e., a management system (200)). The charge information relates to charging a storage battery (22) of an electric vehicle (2) with first electricity derived from renewable energy, and charging the storage battery (22) with second electricity derived from grid electricity. The emissions calculation method further includes calculating a proportion based on the charge information, using the second server (12). The proportion is an amount of electricity used for the charge with the first electricity out of an amount of electricity used for charging the storage battery (22). The emissions calculation method further includes calculating an amount of carbon dioxide emissions from the electric vehicle (2) based on the proportion, a first emission coefficient, and a second emission coefficient using the second server (12). The first emission coefficient is an emission coefficient of carbon dioxide related to the renewable energy. The second emission coefficient is an emission coefficient of carbon dioxide related to the grid electricity. The emissions calculation method further includes outputting the amount of carbon dioxide emissions.

FIG. 6

**Description**

[Technical Field]

The present invention relates to an emissions calculation method, and so on, of calculating the amount of carbon dioxide emissions from an electric vehicle.

[Background Art]

Patent Literature 1 discloses a system that grants eco points in accordance with the amount of reduced carbon dioxide ($CO_2$). This system obtains the amount of electricity used for charge and multiplies the obtained amount of electricity by the travel distance of an electric vehicle per 1 kWh to calculate an estimated travel distance of the electric vehicle. This system multiplies the estimated travel distance by the amount of $CO_2$ per kilometer to calculate the amount of reduced $CO_2$.

[Citation List]

[Patent Literature]

[PTL 1] Japanese Unexamined Patent Application Publication No. 2012-059197

[Summary of Invention]

[Technical Problem]

The present invention provides an emissions calculation method, and so on, that is likely to accurately obtain carbon dioxide emissions while an electric vehicle is traveling.

[Solution to Problem]

An emissions calculation method according to an aspect of the present invention includes: obtaining charge information, using at least one of an electric vehicle or a management system that manages the electric vehicle. The charge information relates to charging a storage battery of the electric vehicle with first electricity derived from renewable energy, and charging the storage battery with second electricity derived from grid electricity. The emissions calculation method further includes: calculating a proportion based on the charge information, using at least one of the electric vehicle or the management system. The proportion is an amount of electricity used for the charge with the first electricity out of an amount of electricity used for charging the storage battery. The emissions calculation method further includes: calculating an amount of carbon dioxide emissions from the electric vehicle, based on the proportion, a first emission coefficient, and a second emission coefficient, using at least one of the electric vehicle or the management system. The first emission coefficient is an emission coefficient of carbon dioxide related to the renewable energy. The second emission coefficient is an emission coefficient of carbon dioxide related to the grid electricity. The emissions calculation method further includes: outputting the amount of the carbon dioxide emissions.

An emissions calculation method according to another aspect of the present invention includes: obtaining charge information and an amount of electricity consumed by an electric vehicle while traveling, using at least one of the electric vehicle or a management system that manages the electric vehicle. The charge information relates to charging a storage battery of the electric vehicle with first electricity derived from renewable energy, and charging the storage battery with second electricity derived from grid electricity. The emissions calculation method further includes: calculating a proportion based on the charge information, using at least one of the electric vehicle or the management system. The proportion is an amount of electricity used for the charge with the first electricity out of an amount of electricity used for charging the storage battery. The emissions calculation method further includes: calculating an amount of carbon dioxide emissions from the electric vehicle, based on the proportion, a first emission coefficient, a second emission coefficient, and the amount of electricity consumed by the electric vehicle while traveling, using at least one of the electric vehicle or the management system. The first emission coefficient is an emission coefficient of carbon dioxide related to the renewable energy. The second emission coefficient is an emission coefficient of carbon dioxide related to the grid electricity. The emissions calculation method further includes: outputting the amount of carbon dioxide emissions.

A program according to an aspect of the present invention causes one or more processors to execute the emissions calculation method described above.

An emissions calculation system according to an aspect of the present invention is included in at least one of an electric vehicle or a management system that manages the electric vehicle. The emissions calculation system includes: an obtainer, a first calculator, a second calculator, and an outputter. The obtainer obtains charge information on charging a storage battery of the electric vehicle with first electricity derived from renewable energy, and charging the storage battery with second electricity derived from grid electricity. The first calculator that calculates a proportion based on the charge information. The proportion is an amount of electricity used for the charge with the first electricity out of an amount of electricity used for charging the storage battery. The second calculator calculates an amount of carbon dioxide emissions from the electric vehicle, based on the proportion, a first emission coefficient, and a second emission coefficient. The first emission coefficient is an emission coefficient of carbon dioxide related to the renewable energy. The second emission coefficient is an emission coefficient of carbon dioxide related to the grid electricity. The outputter that outputs the amount of carbon dioxide emissions.

An emissions calculation system according to another aspect of the present invention is included in at least one of an electric vehicle or a management system that manages the electric vehicle. The emissions calculation system includes: an obtainer, a first calculator, a second calculator, and an outputter. The obtainer obtains charge information and an amount of electricity consumed by the electric vehicle while traveling, the charge information relating to charging a storage battery of the electric vehicle with first electricity derived from renewable energy, and charging the storage battery with second electricity derived from grid electricity; a first calculator that calculates a proportion based on the charge information, the proportion being an amount of electricity used for the charge with the first electricity out of an amount of electricity used for charging the storage battery; a second calculator that calculates an amount of carbon dioxide emissions from the electric vehicle, based on the proportion, a first emission coefficient, a second emission coefficient, and the amount of electricity consumed by the electric vehicle while traveling, the first emission coefficient being an emission coefficient of carbon dioxide related to the renewable energy, the second emission coefficient being an emission coefficient of carbon dioxide related to the grid electricity; and an outputter that outputs the amount of carbon dioxide emissions.

[Advantageous Effects of Invention]

The emissions calculation method, and so on, according to the present invention is advantageous in accurately obtaining carbon dioxide emission while an electric vehicle is traveling.

[Brief Description of Drawings]

[FIG. 1]

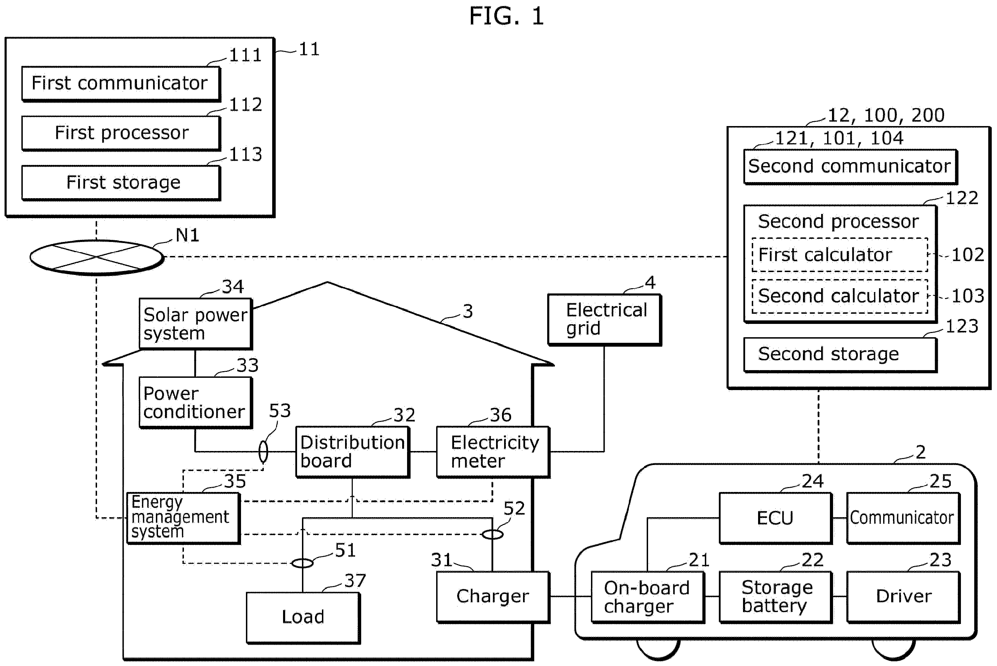

FIG. 1 is a block diagram showing an overall configuration including an emissions calculation system according to an embodiment.
[FIG. 2]

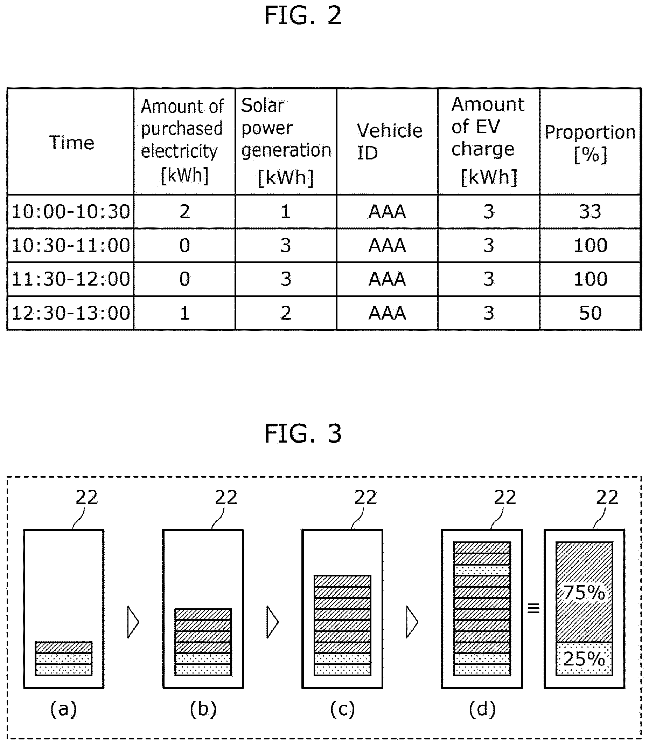

FIG. 2 shows example charge information.
[FIG. 3]
FIG. 3 shows an example charge history of a storage battery of an electric vehicle.
[FIG. 4]

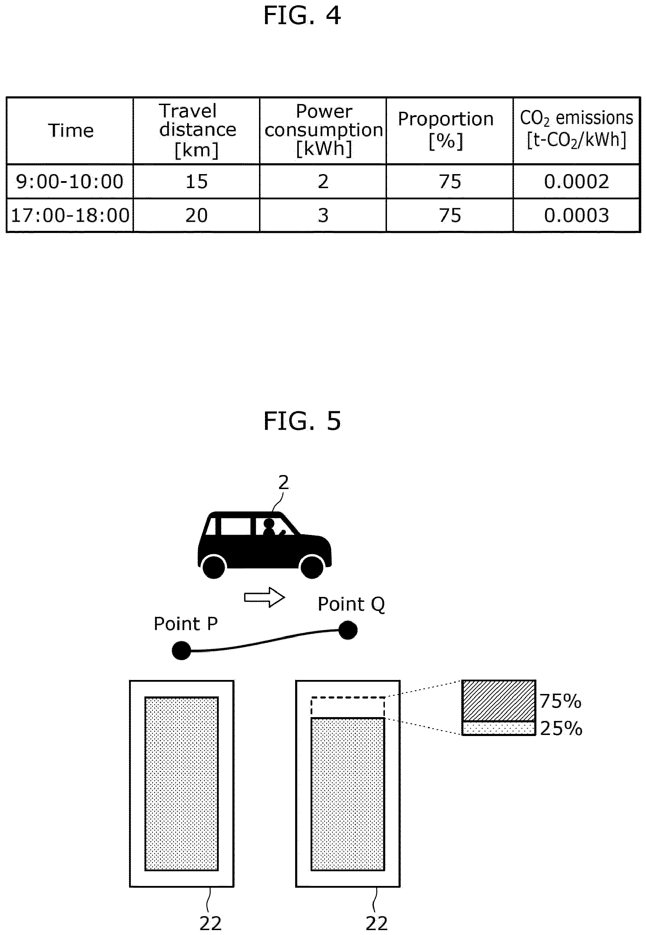

FIG. 4 shows example emissions information.
[FIG. 5]
FIG. 5 shows example breakdown of power consumption by the storage battery of the electric vehicle.
[FIG. 6]

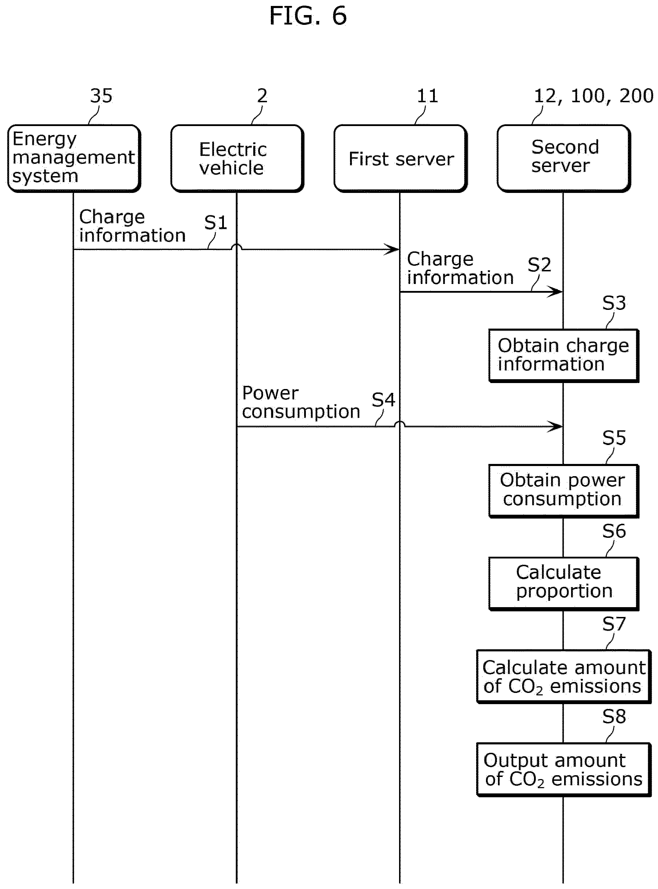

FIG. 6 is a sequence diagram showing an example operation of the emissions calculation system according to the embodiment.

[Description of Embodiment]

[Embodiment]

[1. Background]

First, the background led to the finding of an emissions calculation method and an emissions calculation system according to an embodiment will be described. In order to achieve carbon neutrality to reduce the carbon dioxide emissions to substantially zero, there is a demand for reducing the carbon dioxide emissions while an electric vehicle is traveling. It is particularly an important issue for companies manufacturing electric vehicles to reduce the carbon dioxide emissions while using an electric vehicle, that is, while traveling to reduce supply chain emissions under the greenhouse gas (GHG) protocol.

Here, the carbon dioxide emissions while the electric vehicle is traveling can be reduced by charging the storage battery of the electric vehicle, using electricity derived from renewable energy that causes less carbon dioxide emissions. However, the storage battery of the electric vehicle is not always charged with the electricity derived from renewable energy but may be charged with electricity derived from grid electricity. Accordingly, without grasping the source of the electricity used for charging the storage battery of the electric vehicle, the carbon dioxide emissions while the electric vehicle is traveling cannot be obtained accurately.

Without accurately obtaining the carbon dioxide emissions while the electric vehicle is traveling, incentives for promoting the spread of electric vehicles and investment in the introduction of renewable energy are less likely to work. Without accurately obtaining the carbon dioxide emissions while the electric vehicle is traveling, corporate efforts for reducing the carbon dioxide emissions are difficult to be reflected on the degree of reducing the carbon dioxide emissions.

In view of the foregoing, the present inventor has arrived at the present invention.

Now, an embodiment will be described in detail with reference to the drawings. The embodiment described below is a mere general or specific example of the present invention. The numerical values, shapes, materials, elements, the arrangement and connection of the elements, steps, step orders etc. shown in the following embodiment are thus mere examples, and are not intended to limit the scope of the present invention. Among the elements in the following embodiment, those not recited in the independent claims will be described as optional.

The figures are schematic representations and not necessarily drawn strictly to scale. The same reference signs represent substantially the same configurations in the drawings and redundant description will be omitted or simplified.

[2. Configuration]

Next, an overall configuration including an emissions calculation system according to an embodiment will be described with reference to FIG. 1. FIG. 1 is a block diagram showing an overall configuration including emissions calculation system 100 according to an embodiment.

In this embodiment, emissions calculation system 100 is, as shown in FIG. 1, achieved by second server 12. Second server 12 is communicative with first server 11 and electric vehicle 2 via network N1, such as the Internet.

First server 11 manages energy management system 35 by communicating with energy management system 35 placed in facility 3 via network N1. In the example shown in FIG. 1, first server 11 communicates with one energy management system 35 placed in facility 3. If there are a plurality of facilities 3, first server 11 communicates with respective energy management systems 35 placed in the plurality of facilities 3. In this case, first server 11 manages the plurality of energy management systems 35. The following description will be given while focusing on one energy management system 35 managed by first server 11.

First server 11 includes first communicator 111, first processor 112, and first storage 113.

First communicator 111 is a communication module (i.e., a communication circuit) that communicates with an external system via network N1. In this embodiment, first communicator 111 communicates with second communicator 121 of second server 12 as the external system via network N1. First communicator 111 also communicates with energy management system 35 as the external system via network N1. Accordingly, first communicator 111 obtains the charge information transmitted from energy management system 35 periodically.

The charge information relates to the charging storage battery 22 of electric vehicle 2. Specifically, the charge information relates to the charging storage battery 22 of electric vehicle 2 with first electricity derived from renewable energy, and the charging storage battery 22 with second electricity derived from grid electricity. The charge information includes not only the latest information on charging storage battery 22 of electric vehicle 2 but also the history of the charge in the past. In this embodiment, as will be described later, storage battery 22 of electric vehicle 2 may be charged with the electricity generated by solar power system 34 or the electricity supplied from electrical grid 4. That is, in this embodiment, the first electricity derived from renewable energy is generated by solar power system 34.

First processor 112 performs processing fulfilling various functions of first server 11. First processor 112 may be a microcomputer, for example, but may be a processor or a dedicated circuit. The functions of first processor 112 are implemented as hardware, such as a microcomputer or a processor, which forms first processor 112, executing the computer programs (software) stored in first storage 113. First processor 112 causes first storage 113 to store the charge information obtained from energy management system 35 via first communicator 111.

First storage 113 is a storage device that stores information necessary for first processor 112 to execute the processing. The information stored in first storage 113 includes the computer programs to be executed by first processor 112. First storage 113 is a semiconductor memory, for example. First storage 113 stores the charge information obtained from energy management system 35.

Second server 12 is a server that manages electric vehicle 2 by communicating with electric vehicle 2 via network N1. In other words, second server 12 is a management system that manages electric vehicle 2. In the example shown in FIG. 1, second server 12 communicates with one electric vehicle 2. If there are a plurality of electric vehicles 2, second server 12 communicates with each of the plurality of electric vehicles 2. In this case, second server 12 manages the plurality of electric vehicles 2. The following description will be given while focusing on one electric vehicle 2 managed by second server 12.

Second server 12 includes second communicator 121, second processor 122, and second storage 123.

Second communicator 121 is a communication module (i.e., a communication circuit) that communicates with an external system via network N1. In this embodiment, second communicator 121 communicates with first communicator 111 of first server 11 as the external system via network N1. Second communicator 121 also communicates with electric vehicle 2 as the external system via network N1. Second communicator 121 obtains the charge information from energy management system 35 via first server 11. Accordingly, second communicator 121 obtains the charge information periodically, that is, in each time period. Second communicator 121 corresponds to obtainer 101 of emissions calculation system 100.

Second communicator 121 periodically obtains the amount of electricity consumed by electric vehicle 2 while traveling by communicating with electric vehicle 2 as an external system via network N1. Assume that second communicator 121 calculates the carbon dioxide emissions only by a first method using second calculator 103, which will be described later. In this case, there is no need for second communicator 121 to obtain the amount of electricity consumed by electric vehicle 2 while traveling.

Second communicator 121 transmits the carbon dioxide emissions calculated by second calculator 103, which will be described later, to an external system via network N1. Examples of the external system here include electric vehicle 2, a server operated by a company manufacturing electric vehicle 2, and an information terminal owned by the user of electric vehicle 2. Examples of the information terminal may include a smartphone, a tablet terminal, or a personal computer. Second communicator 121 corresponds to outputter 104 of emissions calculation system 100. Second communicator 121 may transmit the carbon dioxide emissions to the external system periodically or may transmit the carbon dioxide emissions to the external system in response to a request by the external system.

Second processor 122 performs processing fulfilling various functions of second server 12. Second processor 122 may be a microcomputer, for example, but may be a processor or a dedicated circuit. The functions of second processor 122 are implemented as hardware, such as a microcomputer or a processor, which forms second processor 122, executing the computer programs (software) stored in second storage 123. Second processor 122 causes second storage 123 to store the charge information obtained from first server 11 via second communicator 121.

Second processor 122 also includes first calculator 102 and second calculator 103 of emissions calculation system 100. In this embodiment, the hardware, such as a microcomputer or a processor, which forms second processor 122, executing a predetermined program. Accordingly, first calculator 102 and second calculator 103 fulfill respective functions.

First calculator 102 calculates a proportion (e.g., a percentage here) based on the charge information obtained by obtainer 101 (or second communicator 121). The proportion is the amount of electricity used for the charge with the first electricity out of the amount of electricity used for charging storage battery 22. Now, a detailed example calculation of the proportion by first calculator 102 will be described with reference to FIGS. 2 and 3. FIG. 2 show example charge information. FIG. 3 shows an example charge history of storage battery 22 of electric vehicle 2.

In FIG. 2, the item "Time" represents the time period of charging storage battery 22 of electric vehicle 2, the item "Amount of purchased electricity" the amount of electricity (unit: "kWh") supplied from electrical grid 4, and the item "Solar power generation" the amount of electricity (unit: "kWh") charged by solar power system 34. In FIG. 2, "Vehicle ID" the identifier of electric vehicle 2, "Amount of EV charge" the amount of electricity (unit: "kWh") charged by storage battery 22 of electric vehicle 2, and "Proportion" the proportion (unit: "%") calculated by first calculator 102.

FIG. 3 visually represents the amounts of electricity used for charging storage battery 22 of electric vehicle 2 with the first electricity and with the second electricity. In FIG. 3, the hatched rectangles represent the amount of electricity charged with the first electricity, while the dotted rectangles represent the amount of electricity charged with the second electricity. In FIG. 3, (a), (b), (c), and (d) represent the states of storage battery 22 in the periods of 10:00 to 10:30, 10:30 to 11:00, 11:30 to 12:00, and 12:30 to 13:00, respectively.

Here, the description assumes that the sum of the "Amount of purchased electricity" and the "Solar power generation" in a certain time period corresponds to the "Amount of EV charge". Specifically, the description assumes that the electricity (i.e., the second electricity) supplied from electrical grid 4 and the electricity (i.e., the first electricity) generated by solar power system 34 in a certain time period are all used for charging storage battery 22 of electric vehicle 2.

For example, in the time period of 10:00 to 10:30, the "Amount of EV charge" is 3 kWh, while the "Solar power generation" is 1 kWh. In this case, first calculator 102 calculates the proportion in the time period of 10:00 to 10:30 as $100 \times 1/3 \approx 33\%$. For example, in the time period of 10:00 to 13:00, the "Amount of EV charge" is $3 + 3 + 3 + 3 = 12$ kWh, while the "Solar power generation" is $1 + 3 + 3 + 2 = 9$ kWh. In this case, first calculator 102 calculates the proportion in the time period of 10:00 to 13:00 as $100 \times 9/12 = 75\%$.

Second calculator 103 calculates the amount of carbon dioxide emissions from electric vehicle 2, based on the proportion calculated by first calculator 102, a first emission coefficient, and a second emission coefficient. The first emission coefficient is an emission coefficient of carbon dioxide related to renewable energy. The second emission coefficient is an emission coefficient of carbon dioxide related to grid electricity.

The first emission coefficient and the second emission coefficient are both disclosed by a government via its homepage, for example, and are stored in advance in second storage 123. The description assumes here that the first emission coefficient is 0 [t - $CO_2$/kWh]. Needless to mention, the first emission coefficient may be different from 0 [t - $CO_2$/kWh]. The description assumes here that the second emission coefficient is 0.0004 [t - $CO_2$/kWh]. Needless to mention, the second emission coefficient may be different from 0.0004 [t - $CO_2$/kWh].

Note that the first emission coefficient may be disclosed via a homepage or any other means by a business operator that provides a power supply system (here, solar power system 34) that generates the first electricity, for example. For example, the second emission coefficient may be disclosed by the electricity utility operating electrical grid 4 via its homepage or any other means.

Here, there are the following two methods for second calculator 103 to calculate the amount of carbon dioxide emissions from electric vehicle 2. Second calculator 103 may calculate the carbon dioxide emissions by any one of the two methods or by both the two methods.

In the first method, once obtainer 101 obtains charge information, second calculator 103 calculates the amount of carbon dioxide emissions from electric vehicle 2, on the assumption that electric vehicle 2 consumes all the amount of electricity used for charging storage battery 22 of electric vehicle 2. Here, the "amount of electricity used for charging storage battery 22 of electric vehicle 2" is, for example, the total amount of electricity used for charging storage battery 22 from the time when electric vehicle 2 has been connected to charger 31 via a power cable and the charge has started to the time when the power cable is disconnected from electric vehicle 2 and the charge ends.

Specifically, in the first method, second calculator 103 calculates the carbon dioxide emissions in accordance with following Equation (1). In Equation (1), "A1" represents the carbon dioxide emissions, "P1" the amount of electricity used for charging storage battery 22 of electric vehicle 2, "$\alpha$" the proportion of the amount of electricity used for the charge with the first electricity out of the amount of electricity used for charging storage battery 22, "C1" the first emission coefficient, and "C2" the second emission coefficient.

$$A1 = P1 \times \alpha \times C1 + P1 \times (1 - \alpha) \times C2 \qquad \ldots (1)$$

For example, assume that obtainer 101 obtains charge information in the time period of 10:00 to 13:00 shown in FIG. 2. In this case, the amount of electricity used for charging storage battery 22 of electric vehicle 2 is 12 kWh and the proportion calculated by first calculator 102 is 75%. Second calculator 103 thus calculates the amount of carbon dioxide emissions from electric vehicle 2 as $12 \times 75$ [%] $\times 0 + 12 \times 25$ [%] $\times 0.0004 = 0.0012$ [t] in accordance with Equation (1) described above.

In the second method, second calculator 103 calculates the carbon dioxide emissions, based on the amount of electricity consumed by electric vehicle 2 while traveling. In this case, second calculator 103 calculates the amount of carbon dioxide emissions from electric vehicle 2, based on the proportion calculated by first calculator 102, the first emission coefficient, the second emission coefficient, and the amount of electricity consumed by electric vehicle 2 while traveling.

Specifically, in the second method, second calculator 103 calculates the carbon dioxide emissions in accordance with following Equation (2). In Equation (2), "A2" represents the carbon dioxide emissions, and "P2" the amount of electricity consumed by the electric vehicle while traveling. Note that "a", "C1", and "C2" are the same as in Equation (1).

$$A2 = P2 \times \alpha \times C1 + P2 \times (1 - \alpha) \times C2 \qquad \ldots (2)$$

Now, a specific example calculation of the carbon dioxide emissions using second calculator 103 will be described with reference to FIGS. 4 and 5. FIG. 4 shows example emission information. The emissions information relates to the amount of carbon dioxide emissions from electric vehicle 2. FIG. 5 shows example breakdown of power consumption by storage battery 22 of electric vehicle 2.

In FIG. 4, the item "Time" represents the time period in which electric vehicle 2 has traveled, the item "Travel distance" the distance (unit: "km") in which electric vehicle 2 has traveled, the item "Power consumption" the amount of electricity (unit: "kWh") consumed by electric vehicle 2 while traveling, and the item "proportion" (unit: "%") the proportion calculated by first calculator 102. In FIG. 4, the item "$CO_2$ emissions" represents the carbon dioxide emissions (unit: "t - $CO_2$/kWh") in the time period in which electric vehicle 2 has traveled, which is calculated by second calculator 103. The times shown in FIG. 4 are of a day different from the day shown in FIG. 2 on which the charge information has been obtained. In the example shown in FIG. 4, the proportion is calculated by first calculator 102, based on the charge information in the time period of 10:00 to 13:00 obtained by obtainer 101 as shown in FIG. 2. Note that the emissions information not necessarily includes the distance traveled by electric vehicle 2.

FIG. 5 visually represents the amount of electricity used for charging storage battery 22 of electric vehicle 2 at point P, and the amount of electricity used for charging storage battery 22 of electric vehicle 2 at point Q. In FIG. 5, like in FIG. 3, the hatched rectangles represent these amount of electricity charged with the first electricity, while the dotted rectangles represent the amount of electricity charged with the second electricity. In the example shown in FIG. 5, electric vehicle 2 consumes the amount of electricity used for charging storage battery 22, while travelling from point P to point Q. In terms of the power consumption, it is assumed that the amount of electricity charged with the first electricity and the amount of electricity charged with the second electricity are consumed. The ratio of the amounts of electricity corresponds to the proportion described above. That is, here, the amount of consumed first electricity is 75%, while amount of consumed second electricity is 25%, among the amounts of consumed electricity.

For example, in the time period of 9:00 to 10:00, the power consumption is 2 kWh and the proportion calculated by first calculator 102 is 75%. Second calculator 103 thus calculates the amount of carbon dioxide emissions from electric vehicle 2 in the time period as $2 \times 75 [\%] \times 0 + 2 \times 25 [\%] \times 0.0004 = 0.0002$ [t] in accordance with the Equation (2) described above.

Second storage 123 is a storage device that stores information necessary for second processor 122 to execute the processing. The information stored in second storage 123 includes the computer programs to be executed by second processor 122. Second storage 123 is a semiconductor memory, for example. Second storage 123 stores the charge information obtained from first server 11, the proportion calculated by first calculator 102, and the carbon dioxide emissions calculated by second calculator 103.

Electric vehicle 2 travels using the electric energy charged in storage battery 22 as all or part of the power. Examples of electric vehicle 2 may include an electric car or a plug-in hybrid car. Electric vehicle 2 includes on-board charger 21, storage battery 22, driver 23, electronic control unit (ECU) 24, and communicator 25.

On-board charger 21 converts the AC electricity supplied from charger 31 via a power cable into DC electricity suitable for charging and discharging storage battery 22, and supplies the DC electricity to storage battery 22.

Storage battery 22 is a lithium-ion battery, for example, that stores electric energy used as the power of electric vehicle 2 by receiving the electricity supplied from charger 31 via on-board charger 21.

Examples of driver 23 include a motor with a mechanism that drives electric vehicle 2 to travel by rotating a plurality of wheels of electric vehicle 2 using, as the power, the electric energy stored in storage battery 22.

ECU 24 performs processing fulfilling various functions by controlling various electronic devices included in electric vehicle 2. ECU 24 may be a microcomputer, for example, but may be a processor or a dedicated circuit. The functions of ECU 24 are implemented as hardware, such as a microcomputer or a processor, which forms ECU 24, executing the computer programs (software) stored in a memory.

Communicator 25 is a communication module (i.e., a communication circuit) that communicates with an external system via network N1. In this embodiment, communicator 25 communicates with second server 12 as the external system via network N1.

Facility 3 is a housing facility, such as a detached house or an apartment complex. In this embodiment, facility 3 will be described as a detached house. Facility 3 includes charger 31, distribution board 32, power conditioner 33, solar power system 34, energy management system 35, electricity meter 36, and one or more loads 37.

Charger 31 is connectable to electric vehicle 2 via a power cable. While being connected to electric vehicle 2 via the power cable, charger 31 transmits and receives electricity to and from electric vehicle 2 under the control of energy management system 35. Specifically, charger 31 charges storage battery 22 included in electric vehicle 2 by supplying electricity to electric vehicle 2 via the power cable. In addition, charger 31 supplies electricity to distribution board 32 by receiving the electricity discharged by storage battery 22 of electric vehicle 2 via the power cable. That is, charger 31 supports the vehicle to home (V2H) function. Note that charger 31 not necessarily supports the V2H function, but only needs to have at least the function of charging storage battery 22 of electric vehicle 2.

Charger 31 includes a DC-DC conversion circuit and an AC-DC conversion circuit. Charger 31 performs AC/DC conversion between the voltage suitable for use in facility 3 and the voltage suitable for charging and discharging storage battery 22 of electric vehicle 2, using an AC-DC conversion circuit, for example. The "voltage suitable for use in facility 3" is an AC voltage of 100 V, for example. The "voltage suitable for charging and discharging storage battery 22 of electric vehicle 2" is a DC voltage of 300 V to 400 V, for example.

Distribution board 32 is connected to one or more loads 37, charger 31, power conditioner 33, and electrical grid 4. Distribution board 32 includes one or more branch circuits, one or more relays, and one or more breakers, for example. Distribution board 32 branches the grid electricity supplied from electrical grid 4 and supplies the grid electricity to one or more loads 37, for example. In addition, distribution board 32 supplies electricity to charger 31 when charging storage battery 22 of electric vehicle 2. When supplied with the electricity discharged from storage battery 22 of electric vehicle 2 via charger 31, distribution board 32 branches and supplies the electricity discharged from storage battery 22 to one or more loads 37, for example. When supplied with the electricity generated by solar power system 34 via power conditioner 33, distribution board 32 can branch and supply the electricity to one or more loads 37 or charger 31. Note that distribution board 32 may be able to supply the electricity generated by solar power system 34 to electrical grid 4.

Power conditioner 33 is connected between solar power system 34 and distribution board 32. Power conditioner 33 converts the DC electricity generated by solar power system 34 into AC electricity and supplies the converted AC electricity to distribution board 32.

Solar power system 34 includes one or more solar cell modules placed on, for example, the roof of facility 3. Solar power system 34 supplies the electricity generated by one or more solar cell modules to distribution board 32 via power conditioner 33 by sunlight irradiation.

Energy management system 35 is what is called a home energy management system (HEMS) device that manages the energy (e.g., the electricity and gas) consumed by a plurality of devices, such as one or more loads 37, of facility 3 and controls the plurality of devices. In this embodiment, energy management system 35 obtains the amounts of electricity consumed by one or more loads 37, based on the currents measured by first current sensors 51 placed in one or more branch circuits between distribution board 32 and one or more loads 37. Energy management system 35 also obtains the amount of electricity (corresponding to "Amount of EV charge" in FIG. 2) supplied from charger 31 to storage battery 22 of electric vehicle 2, based on the current measured by second current sensor 52 placed in a branch circuit between distribution board 32 and charger 31. Energy management system 35 also obtains the amount of electricity (corresponding to "Solar power generation" in FIG. 2) generated by solar power system 34, based on the current measured by third current sensor 53 interposed between distribution board 32 and power conditioner 33. Energy management system 35 further obtains the amount of electricity (corresponding to "Amount of purchased electricity" in FIG. 2) supplied from electrical grid 4 to distribution board 32, based on the amount of electricity measured by electricity meter 36, such as a smart meter.

In this embodiment, first current sensors 51, second current sensor 52, and third current sensor 53 are all clamp type current transformers.

Energy management system 35 includes a communication module that performs short-range wireless communication with a relay device, such as a wireless router, under a communication protocol, such as the Wi-Fi (registered trademark). Energy management system 35 communicates with first server 11 via relay device network N1.

Examples of one or more loads 37 include a home appliance, such as an air conditioner, placed in facility 3. Here, one or more loads 37 are devices operated by electricity.

[3. Operation]

Now, an operation of emissions calculation system 100 according to the embodiment will be described with reference to FIG. 6. FIG. 6 is a sequence diagram showing an example operation of emissions calculation system 100 according to the embodiment. As described already, emissions calculation system 100 are second server 12 in this embodiment. In the example shown in FIG. 6, the description assumes that second calculator 103 of second server 12 calculates the carbon dioxide emissions form electric vehicle 2 by the second method described above.

First, energy management system 35 periodically transmits charge information to first server 11 via network N1 (S1). Upon receipt of the charge information, first server 11 transmits the charge information to second server 12 via network N1 (S2). Accordingly, second communicator 121 (or obtainer 101) of second server 12 obtains charge information periodically, that is, in each time period (S3).

Electric vehicle 2 also transmits the amount of electricity consumed by storage battery 22 to second server 12 via network N1 periodically (S4). Accordingly, second communicator 121 (or obtainer 101) of second server 12 obtains the power consumption periodically, that is, in each time period (S5).

Next, first calculator 102 of second server 12 calculates a proportion based on the obtained charge information (S6). The proportion is the amount of electricity used for the charge with the first electricity out of the amount of electricity used for charging storage battery 22 of electric vehicle 2. Second calculator 103 of second server 12 then calculates the amount of carbon dioxide emissions from electric vehicle 2, based on the proportion calculated by first calculator 102, the first emission coefficient, the second emission coefficient, and the power consumption obtained by second communicator 121 (or obtainer 101) (S7). The calculated carbon dioxide emissions are stored in second storage 123 of second server 12.

After that, second communicator 121 (or outputter 104) of second server 12 transmits (or outputs) the amount of carbon dioxide emissions calculated by second calculator 103 to an external system (e.g., electric vehicle 2, a server operated by a company manufacturing electric vehicle 2, or an information terminal owned by the user of electric vehicle 2) periodically or upon request by the external system (S8).

[4. Advantages]

Now, the advantages of the emissions calculation method and emissions calculation system 100 according to the embodiment will be described. As mentioned already, storage battery 22 of electric vehicle 2 is not necessarily charged with electricity derived from renewable energy but may be charged with electricity derived from grid electricity. There arises thus the following problem. Unless grasping the source of the electricity used to charge storage battery 22 of electric vehicle 2, the carbon dioxide emissions while electric vehicle 2 is traveling cannot be obtained accurately.

To address the problem, the emissions calculation method and emissions calculation system 100 according to the embodiment include obtaining charge information on charging storage battery 22 of electric vehicle 2 with first electricity derived from renewable energy, and the charging storage battery 22 with second electricity derived from grid electricity. The emissions calculation method and emissions calculation system 100 according to the embodiment further include calculating a proportion based on the charge information. The proportion is the amount of electricity used for the charge with the first electricity out of the amount of electricity used for charging storage battery 22. The emissions calculation method and emissions calculation system 100 according to the embodiment further include calculating the amount of carbon dioxide emissions from electric vehicle 2, based on the calculated proportion, a first emission coefficient, and a second emission coefficient, The first emission coefficient is an emission coefficient of carbon dioxide related to renewable energy. The second emission coefficient is an emission coefficient of carbon dioxide related to grid electricity.

In this manner, the emissions calculation method and emissions calculation system 100 according to the embodiment calculate the carbon dioxide emissions, based on from which source of electricity is used to charge storage battery 22 of electric vehicle 2. The emissions calculation method and emissions calculation system 100 are thus advantageous in accurately obtaining the carbon dioxide emissions while electric vehicle 2 is traveling.

In particular, the second method of second calculator 103 includes calculating the carbon dioxide emissions, while further referring to the amount of electricity consumed by electric vehicle 2 while actually traveling. The second method is thus advantageous in accurately obtaining the carbon dioxide emissions while electric vehicle 2 is traveling.

Since the carbon dioxide emissions while electric vehicle 2 is traveling can be obtained accurately, incentives for promoting the spread of electric vehicle 2 and investment in the introduction of renewable energy are less likely to work. Since the carbon dioxide emissions while electric vehicle 2 is traveling can be obtained accurately, corporate efforts for reducing the carbon dioxide emissions are likely to be reflected on the degree of reducing the carbon dioxide emissions.

[5. Variation]

While an embodiment has been described above, the present invention is not limited thereto.

For example, in the embodiment described above, second communicator 121 (or obtainer 101) of second server 12 obtains the charge information from energy management system 35 via first server 11. The route is however not limited thereto. For example, second communicator 121 of second server 12 may obtain charge information directly from energy management system 35 via network N1 not via first server 11.

In the embodiment described above, second server 12 that is management system 200 that manages electric vehicle 2 calculates the carbon dioxide emissions. The configuration is however not limited thereto. For example, electric vehicle 2 may calculate the carbon dioxide emissions. That is, emissions calculation system 100 may be achieved by second server 12 that is management system 200 or may be achieved by electric vehicle 2. A part of emissions calculation system 100 may be achieved by second server 12, and the rest may be achieved by electric vehicle 2. That is, emissions calculation system 100 may be distributed into electric vehicle 2 and management system 200 (or second server 12).

In the embodiment described above, obtainer 101 (or second communicator 121) obtains the charge information periodically. The obtainment are however not limited thereto. For example, obtainer 101 may obtain charge information occasionally upon request by the user of emissions calculation system 100. In this case, outputter 104 outputs the amount of carbon dioxide emissions occasionally.

In the embodiment described above, the first electricity derived from renewable energy is generated by solar power system 34. The first electricity is however not limited thereto. For example, the first electricity may be derived from other renewable energy, such as wind power, geothermal power, hydropower, or biomass. In this manner, if the first electricity is derived from other renewable energy different from solar power, the first emission coefficient may be changed as appropriate according to the type of the renewable energy. That is, the first emission coefficient may be updated according to the type of the first electricity.

The first emission coefficient may be changed, even if the type of the first electricity is unchanged but there is a change in the emission coefficient disclosed by the electricity utility operating the power source. Sinc this case allows calculation of the carbon dioxide emissions using the latest first emission coefficient, an improvement in the accuracy in calculating the carbon dioxide emissions can be expected.

Like the first emission coefficient, the second emission coefficient may be updated according to the type of the second electricity. Specifically, the electricity supplied from electrical grid 4, which corresponds to the supplier of the second electricity, may include only the electricity derived from fossil energy, such as oil, coal, or natural gas but may partially include electricity derived from renewable energy. Accordingly, the second emission coefficient may be changed depending on the configuration of the electricity supplied from electrical grid 4. The second emission coefficient may thus be updated according to the type of the second electricity, in other words, depending on the electricity utility operating electrical grid 4.

The second emission coefficient may be changed, even if the electricity utility operating electrical grid 4 is unchanged but there is a change in the emission coefficient disclosed by the electricity utility. Since this case allows calculation of the carbon dioxide emissions using the latest second emission coefficient, an improvement in the accuracy in calculating the carbon dioxide emissions can be expected.

The emissions calculation method and emissions calculation system 100 according to the embodiment described above are applicable not only to carbon dioxide but also greenhouse gas other than carbon dioxide. Specifically, the emissions calculation method includes obtaining charge information, using at least one of electric vehicle 2 or management system 200 (or second server 12) that manages electric vehicle 2. The charge information relates to charging storage battery 22 of electric vehicle 2 with first electricity derived from renewable energy, and the charging storage battery 22 with second electricity derived from grid electricity. The emissions calculation method further includes calculating a proportion based on the charge information, using at least one of electric vehicle 2 or management system 200. The proportion is the amount of electricity used for the charge with the first electricity out of the amount of electricity used for charging storage battery 22. The emissions calculation method further includes calculating the amount of greenhouse gas emissions from electric vehicle 2, based on the proportion described above, a first emission coefficient, and a second emission coefficient, using at least one of electric vehicle 2 or management system 200. The first emission coefficient is an emission coefficient of the greenhouse gas related to renewable energy. The second emission coefficient is an emission coefficient of the greenhouse gas related to grid electricity. The emissions calculation method further includes outputting the amount of greenhouse gas emissions.

The emissions calculation method includes obtaining charge information and the amount of electricity consumed by electric vehicle 2 while traveling, using at least one of electric vehicle 2 or management system 200 (or second server 12) that manages electric vehicle 2. The charge information relates to charging storage battery 22 of electric vehicle 2 with first electricity derived from renewable energy, and the charging storage battery 22 with second electricity derived from grid electricity. The emissions calculation method further includes calculating a proportion based on the charge information, using at least one of electric vehicle 2 or management system 200. The proportion is the amount of electricity used for the charge with the first electricity out of the amount of electricity used for charging storage battery 22. The emissions calculation method further includes calculating the amount of greenhouse gas emissions from electric vehicle 2, based on the proportion described above, a first emission coefficient, a second emission coefficient, and the amount of electricity consumed by electric vehicle 2 while traveling, using at least one of electric vehicle 2 or management system 200. The first emission coefficient is an emission coefficient of the greenhouse gas related to renewable energy. The second emission coefficient is an emission coefficient of the greenhouse gas related to grid electricity. The emissions calculation method further includes outputting the amount of greenhouse gas emissions.

The emissions calculation system may be achieved by a plurality of devices (e.g., a plurality of servers) or as one device (e.g., one server). If the emissions calculation system is achieved by a plurality of devices, the elements (in particular, functional elements) of the emissions calculation system may be distributed to the plurality of devices in any manner.

How the devices communicate with each other in the embodiment described above is not particularly limited. In addition, a relay device (not shown) (e.g., a broadband router) may intervene in the communication between the devices.

In the embodiment described above, processing executed by a certain processor may be executed by another processor. A plurality of processing may be executed in another order or in parallel.

In the embodiment described above, the elements may be achieved by executing software programs suitable for the elements. The elements may be achieved by a program executor, such as a CPU or a processor, reading out the software programs stored in a recording medium, such as a hard disk or a semiconductor memory, and executing the read-out programs.

The elements may be achieved by hardware. For example, the elements may be circuits (or integrated circuits). These circuits may form one circuit as a whole or may be individual circuits. These circuits may general-purpose circuits or dedicated circuits.

Note that these general and specific aspects of the present invention may be implemented using a system, a device, a method, an integrated circuit, a computer program, or a computer-readable recording medium, such as a CD-ROM, or any combination of systems, devices, methods, integrated circuits, computer programs, or recording media.

For example, the present invention may be implemented as an information processing method to be executed by a computer of the emissions calculation system according to the embodiment described above. The present invention may be implemented as a program (i.e., a computer program product) for causing the computer to execute the information processing method. The present invention may be implemented as a non-transitory computer-readable recoding media storing such a program.

The present invention may include forms obtained by various modifications to the foregoing embodiment that can be conceived by those skilled in the art or forms achieved by freely combining the elements and functions in the foregoing embodiment without departing from the scope and spirit of the present invention.

[Summary]

As described above, the emissions calculation method according to a first aspect includes obtaining charge information, using at least one of electric vehicle 2 or management system 200 (i.e., second server 12) that manages electric vehicle 2. The charge information relates to the charging storage battery 22 of electric vehicle 2 with first electricity derived from renewable energy, and the charging storage battery 22 with second electricity derived from grid electricity. The emissions calculation method further includes calculating a proportion based on the charge information, using at least one of electric vehicle 2 or management system 200. The proportion is an amount of electricity used for the charge with the first electricity out of an amount of electricity used for charging storage battery 22. The emissions calculation method further includes calculating the amount of carbon dioxide emissions from electric vehicle 2, based on the proportion, a first emission coefficient, and a second emission coefficient, using at least one of electric vehicle 2 or management system 200. The first emission coefficient is an emission coefficient of carbon dioxide related to the renewable energy. The second emission coefficient is an emission coefficient of an emission coefficient of carbon dioxide related to the grid electricity. The emissions calculation method further includes outputting the amount of carbon dioxide emissions.

Such an emissions calculation method includes calculating the carbon dioxide emissions, based on from which source of electricity is used to charge storage battery 22 of electric vehicle 2. The emissions calculation method is thus advantageous in accurately obtaining the carbon dioxide emissions while electric vehicle 2 is traveling.

The emissions calculation method according to a second aspect includes obtaining charge information and an amount of electricity consumed by electric vehicle 2 while traveling, using at least one of electric vehicle 2 or management system 200 (i.e., second server 12) that manages electric vehicle 2. The charge information relates to the charging storage battery 22 of electric vehicle 2 with first electricity derived from renewable energy, and the charging storage battery 22 with second electricity derived from grid electricity. The emissions calculation method further includes calculating a proportion based on the charge information, using at least one of electric vehicle 2 or management system 200. The proportion is an amount of electricity used for the charge with the first electricity out of an amount of electricity used for charging storage battery 22. The emissions calculation method further includes calculating the amount of carbon dioxide emissions from electric vehicle 2, based on the proportion described above, a first emission coefficient, a second emission coefficient, and the amount of electricity consumed by electric vehicle 2 while traveling, using at least one of electric vehicle 2 or management system 200. The first emission coefficient is an emission coefficient of carbon dioxide related to the renewable energy. The second emission coefficient is an emission coefficient of an emission coefficient of carbon dioxide related to the grid electricity. The emissions calculation method further includes outputting the amount of carbon dioxide emissions.

Such an emissions calculation method includes calculating the carbon dioxide emissions, based on from which source of electricity is used to charge storage battery 22 of electric vehicle 2. The emissions calculation method is thus advantageous in accurately obtaining the carbon dioxide emissions while electric vehicle 2 is traveling.

The emissions calculation method according to a third aspect is an embodiment of the first or second aspect. In the emissions calculation method, the obtaining of the charge information is performed in each time period. The outputting of the amount of carbon dioxide emissions is performed in the time period.

Such an emissions calculation method can grasp the carbon dioxide emissions while electric vehicle 2 is traveling in each time period and is thus advantageous in improving the convenience.

The emissions calculation method according to a fourth aspect is an embodiment of any one of the first to third aspects. The first electricity is generated by solar power system 34.

Such an emissions calculation method is advantageous in calculating the carbon dioxide emissions, based on the fact that storage battery 22 of electric vehicle 2 is charged with the electricity generated by solar power.

The emissions calculation method according to a fifth aspect is an embodiment of any one of the first to fourth aspects. The first emission coefficient is updated according to a type of the first electricity.

Such an emissions calculation method includes calculating the carbon dioxide emissions, using the first emission coefficient according to the type of the first electricity. The emissions calculation method is thus advantageous in further increasing the accuracy of calculating the carbon dioxide emissions.

The emissions calculation method according to a sixth aspect is an embodiment of any one of the first to fifth aspects. The second emission coefficient is updated according to a type of the second electricity.

Such an emissions calculation method includes calculating the carbon dioxide emissions, using the second emission coefficient according to the type of the second electricity. The emissions calculation method is thus advantageous in further increasing the accuracy of calculating the carbon dioxide emissions.

A program according to a seventh aspect causes one or more processors to execute the emissions calculation method according to any one of the first to sixth aspects.

Such a program calculates the carbon dioxide emissions, based on from which source of electricity is used to charge storage battery 22 of electric vehicle 2. The program is thus advantageous in accurately obtaining the carbon dioxide emissions while electric vehicle 2 is traveling.

Emissions calculation system 100 according to an eighth aspect is included in any one of electric vehicle 2 or management system 200 that manages electric vehicle 2. Emissions calculation system 100 includes obtainer 101 (or second communicator 121), first calculator 102 (or second processor 122), second calculator 103 (or second processor 122), and outputter 104 (or second communicator 121). Obtainer 101 obtains charge information on the charging storage battery 22 of electric vehicle 2 with first electricity derived from renewable energy, and the charging storage battery 22 with second electricity derived from grid electricity. First calculator 102 calculates a proportion based on the charge information. The proportion is the amount of electricity used for the charge with the first electricity out of the amount of electricity used for charging storage battery 22. Second calculator 103 calculates the amount of carbon dioxide emissions from electric vehicle 2, based on the proportion described above, a first emission coefficient, and a second emission coefficient. The first emission coefficient is an emission coefficient of carbon dioxide related to the renewable energy. The second emission coefficient is an emission coefficient of carbon dioxide related to the grid electricity. Outputter 104 outputs the amount of carbon dioxide emissions.

Such emissions calculation system 100 calculates the carbon dioxide emissions, based on from which source of electricity is used to charge storage battery 22 of electric vehicle 2. Emissions calculation system 100 is thus advantageous in accurately obtaining the carbon dioxide emissions while electric vehicle 2 is traveling.

Emissions calculation system 100 according to a ninth aspect is included in any one of electric vehicle 2 or management system 200 that manages electric vehicle 2. Emissions calculation system 100 includes obtainer 101 (or second communicator 121), first calculator 102 (or second processor 122), second calculator 103 (or second processor 122), and outputter 104 (or second communicator 121). Obtainer 101 obtains charge information and an amount of electricity consumed by electric vehicle 2 while traveling. The charge information relates to the charging storage battery 22 of electric vehicle 2 with first electricity derived from renewable energy, and the charging storage battery 22 with second electricity derived from grid electricity. First calculator 102 calculates a proportion based on the charge information. The proportion is an amount of electricity used for the charge with the first electricity out of an amount of electricity used for charging storage battery 22. Second calculator 103 calculates the amount of carbon dioxide emissions from electric vehicle 2, based on the proportion described above, a first emission coefficient, a second emission coefficient, and the amount of electricity consumed by electric vehicle 2 while traveling. The first emission coefficient is an emission coefficient of carbon dioxide related to the renewable energy. The second emission coefficient is an emission coefficient of carbon dioxide related to the grid electricity. Outputter 104 outputs the amounts of carbon dioxide emissions.

Such emissions calculation system 100 calculates the carbon dioxide emissions, based on from which source of electricity is used to charge storage battery 22 of electric vehicle 2. Emissions calculation system 100 is thus advantageous in accurately obtaining the carbon dioxide emissions while electric vehicle 2 is traveling.

[Reference Signs List]

| | |
|---|---|
| 100 | emissions calculation system |
| 101 | obtainer |
| 102 | first calculator |
| 103 | second calculator |
| 104 | outputter |
| 2 | electric vehicle |
| 200 | management system |
| 22 | storage battery |
| 34 | solar power system |

**Claims**

1. An emissions calculation method comprising:

obtaining charge information, using at least one of an electric vehicle or a management system that manages the electric vehicle, the charge information relating to charging a storage battery of the electric vehicle with first electricity derived from renewable energy, and charging the storage battery with second electricity derived from grid electricity;

calculating a proportion based on the charge information, using at least one of the electric vehicle or the management system, the proportion being an amount of electricity used for the charge with the first electricity out of an amount of electricity used for charging the storage battery;

calculating an amount of carbon dioxide emissions from the electric vehicle, based on the proportion, a first emission coefficient, and a second emission coefficient, using at least one of the electric vehicle or the management system, the first emission coefficient being an emission coefficient of carbon dioxide related to the renewable energy, the second emission coefficient being an emission coefficient of carbon dioxide related to the grid electricity; and

outputting the amount of the carbon dioxide emissions.

2. An emissions calculation method comprising:

obtaining charge information and an amount of electricity consumed by an electric vehicle while traveling, using at least one of the electric vehicle or a management system that manages the electric vehicle, the charge information relating to charging a storage battery of the electric vehicle with first electricity derived from renewable energy, and charging the storage battery with second electricity derived from grid electricity;

calculating a proportion based on the charge information, using at least one of the electric vehicle or the management system, the proportion being an amount of electricity used for the charge with the first electricity out of an amount of electricity used for charging the storage battery;

calculating an amount of carbon dioxide emissions from the electric vehicle, based on the proportion, a first emission coefficient, a second emission coefficient, and the amount of electricity consumed by the electric vehicle while traveling, using at least one of the electric vehicle or the management system, the first emission coefficient being an emission coefficient of carbon dioxide related to the renewable energy, the second emission coefficient being an emission coefficient of carbon dioxide related to the grid electricity; and

outputting the amount of carbon dioxide emissions.

3. The emissions calculation method according to claim 1 or 2, wherein

the obtaining of the charge information is performed in each time period; and

the outputting of the amount of carbon dioxide emissions is performed in the time period.

4. The emissions calculation method according to claim 1 or 2, wherein
the first electricity is generated by a solar power system.

5. The emissions calculation method according to claim 1 or 2, wherein
the first emission coefficient is updated according to a type of the first electricity.

6. The emissions calculation method according to claim 1 or 2, wherein
the second emission coefficient is updated according to a type of the second electricity.

7. A program for causing one or more processors to execute the emissions calculation method according to claim 1 or 2.

8. An emissions calculation system included in at least one of an electric vehicle or a management system that manages the electric vehicle, the emissions calculation system comprising:

an obtainer that obtains charge information on charging a storage battery of the electric vehicle with first electricity derived from renewable energy, and charging the storage battery with second electricity derived from grid electricity;

a first calculator that calculates a proportion based on the charge information, the proportion being an amount of electricity used for the charge with the first electricity out of an amount of electricity used for charging the storage battery;

a second calculator that calculates an amount of carbon dioxide emissions from the electric vehicle, based on the proportion, a first emission coefficient, and a second emission coefficient, the first emission coefficient being an emission coefficient of carbon dioxide related to the renewable energy, the second emission coefficient being an emission coefficient of carbon dioxide related to the grid electricity; and

an outputter that outputs the amount of carbon dioxide emissions.

9. An emissions calculation system included in at least one of an electric vehicle or a management system that manages the electric vehicle, the emissions calculation system comprising:

an obtainer that obtains charge information and an amount of electricity consumed by the electric vehicle while traveling, the charge information relating to charging a storage battery of the electric vehicle with first electricity derived from renewable energy, and charging the storage battery with second electricity derived from grid electricity;

a first calculator that calculates a proportion based on the charge information, the proportion being an amount of electricity used for the charge with the first electricity out of an amount of electricity used for charging the storage battery;

a second calculator that calculates an amount of carbon dioxide emissions from the electric vehicle, based on the proportion, a first emission coefficient, a second emission coefficient, and the amount of electricity consumed by the electric vehicle while traveling, the first emission coefficient being an emission coefficient of carbon dioxide related to the renewable energy, the second emission coefficient being an emission coefficient of carbon dioxide related to the grid electricity; and

an outputter that outputs the amount of carbon dioxide emissions.

FIG. 1

12, 100, 200
121, 101, 104

Second communicator — 122

Second processor
First calculator — 102
Second calculator — 103

Second storage — 123

2
Communicator — 25
ECU — 24
Driver — 23
Storage battery — 22
On-board charger — 21

4
Electrical grid

3

Electricity meter — 36
52
Charger — 31

Distribution board — 32

Load — 37
51

Solar power system — 34
Power conditioner — 33
53
Energy management system — 35

11
First communicator — 111
First processor — 112
First storage — 113

N1

# FIG. 2

| Time | Amount of purchased electricity [kWh] | Solar power generation [kWh] | Vehicle ID | Amount of EV charge [kWh] | Proportion [%] |
|---|---|---|---|---|---|
| 10:00-10:30 | 2 | 1 | AAA | 3 | 33 |
| 10:30-11:00 | 0 | 3 | AAA | 3 | 100 |
| 11:30-12:00 | 0 | 3 | AAA | 3 | 100 |
| 12:30-13:00 | 1 | 2 | AAA | 3 | 50 |

# FIG. 3

# FIG. 4

| Time | Travel distance [km] | Power consumption [kWh] | Proportion [%] | $CO_2$ emissions [t-$CO_2$/kWh] |
|---|---|---|---|---|
| 9:00-10:00 | 15 | 2 | 75 | 0.0002 |
| 17:00-18:00 | 20 | 3 | 75 | 0.0003 |

# FIG. 5

# FIG. 6

## INTERNATIONAL SEARCH REPORT

International application No.

**PCT/JP2023/021617**

### A. CLASSIFICATION OF SUBJECT MATTER

***G06Q 50/06***(2012.01)i

FI:  G06Q50/06

According to International Patent Classification (IPC) or to both national classification and IPC

### B. FIELDS SEARCHED

Minimum documentation searched (classification system followed by classification symbols)

G06Q10/00-99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2013/076957 A1 (PANASONIC CORPORATION) 30 May 2013 (2013-05-30)<br>entire text, all drawings | 1-9 |
| A | WO 2021/106263 A1 (PANASONIC INTELLECTUAL PROPERTY MANAGEMENT CO., LTD.) 03 June 2021 (2021-06-03)<br>entire text, all drawings | 1-9 |
| A | WO 2013/024521 A1 (TOYOTA JIDOSHA KABUSHIKI KAISHA) 21 February 2013 (2013-02-21)<br>entire text, all drawings | 1-9 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **10 August 2023** | **22 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/021617**

| Patent document cited in search report | | | Publication date (day/month/year) | Patent family member(s) | | | Publication date (day/month/year) |
|---|---|---|---|---|---|---|---|
| WO | 2013/076957 | A1 | 30 May 2013 | US | 2014/0312841 | A1 | |
| | | | | EP | 2784897 | A1 | |
| | | | | CN | 103947067 | A | |
| WO | 2021/106263 | A1 | 03 June 2021 | US | 2022/0266719 | A1 | |
| WO | 2013/024521 | A1 | 21 February 2013 | US | 2014/0214321 | A1 | |
| | | | | EP | 2743641 | A1 | |
| | | | | CN | 103857985 | A | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012059197 A